Europäisches Patentamt

European Patent Office

Office européen des brevets

(11) Veröffentlichungsnummer: **0 003 523**
**A1**

## (12) EUROPÄISCHE PATENTANMELDUNG

(21) Anmeldenummer: **79100189.4**

(22) Anmeldetag: **23.01.79**

(51) Int. Cl.²: **A 01 K 64/02, B 01 D 29/00**

(30) Priorität: **24.01.78 DE 2802908**

(43) Veröffentlichungstag der Anmeldung: **22.08.79**
**Patentblatt 79/17**

(84) Benannte Vertragsstaaten: **FR IT**

(71) Anmelder: **Köster, Siegfried, Paulsdorfer Strasse 2,**
**D-8000 München 90 (DE)**

(72) Erfinder: **Köster, Siegfried, Paulsdorfer Strasse 2,**
**D-8000 München 90 (DE)**

(74) Vertreter: **Scherrmann, Walter, Dipl.-Ing. et al,**
**Postfach 348 Webergasse 3, D-7300 Esslingen (DE)**

(54) **Aquarienfilter mit mehreren Filterkammern.**

(57) Ein Unterwasserfilter für Aquarien weist ein Basisteil (1) auf, auf dem mehrere gleichartig ausgebildete Filterkassetten (6) übereinander angeordnet sind. Die Filterkassetten (6) sind im wesentlichen quaderförmig ausgeführt und weisen zwei Filterkammern (68, 69) sowie eine Klarwasserkammer (66) auf. Die Klarwasserkammer (66) befindet sich zwischen den beiden Filterkammern (68 und 69) und ist mit dem Basisteil (1) strömungsmäßig verbunden. Die mit Durchbrüchen (610, 620) versehenen Deckel (61 und 62) der quaderförmigen Filterkassette (6) sind abnehmbar, wodurch der Zugang zu den in den Filterkammern (68 und 69) vorhandenen Filtermaterialien möglich ist. Beim Betrieb wird das zu filternde Aquarienwasser mittels einer an das Basisteil angeschlossenen Pumpe durch die Schlitze (610, 620) in die Filterkammern (68 und 69) von dort in die Klarwasserkammer (66) und anschließend in das Basisteil (1) gesaugt und sodann dem Aquarium wieder zugeführt. Zur Vergrößerung der Filterkapazität können auf einem Basisteil mehrere Filterkassetten (6) angeordnet sein oder es können mehrere Basisteile (1) mit darauf angeordneten Filterkassetten (6) strömungsmäßig miteinander verbunden werden.

Patentanwälte Dipl.-Ing. W. Scherrmann Dr.-Ing. R. Rüger

7300 Esslingen (Neckar). Webergasse 3, Postfach 348

19. Januar 1979
PA 15 rüwa

Telefon
Stuttgart (07 11) 35 65 39
35 96 19
Telex 07 256610 smru
Telegramme Patentschutz
Esslingenneckar

0003523

- 1 -

<u>Firma Gunther Eheim Fabrik elektromachanischer Er-
zeugnisse, Plochinger Straße 32, 7301 Deizisau</u>

<u>Aquarienfilter mit mehreren Filterkammern</u>

Die Erfindung betrifft ein Aquarienfilter mit einem
der Zurückhaltung von Verunreinigungen des Aquarienwassers dienenden Filterkörper und einer Ansaugeinrichtung, wobei der Filterkörper zwei zur Aufnahme
von Filtermaterialien bestimmte Filterkammern und
eine mit der Ansaugeinrichtung in Verbindung stehende Klarwasserkammer umfaßt.

Derartige Aquarienfilter sind beispielsweise aus der
DE-OS 2 301 430 bekannt. Die Filterkörper dieser bekannten Aquarienfilter bestehen aus drei mit Abstand zueinander angeordneten, perforierten Filterrohren, wobei die zwischen den Filterrohren liegenden Ringräume die beiden zur Aufnahme von Filtermaterialien dienenden Filterkammern bilden. Die Klarwasserkammer liegt zwischen dem inneren Filterrohr
und dem durch das innere Filterrohr hindurchgeführten Förderrohr einer unterhalb des Filterkörpers angeordneten Mammutpumpe. Das über die Mammutpumpe und
die Klarwasserkammer angesaugte Aquarienwasser durchströmt also nacheinander die äußere und die innere
Filterkammer. Die bekannte Bauart hat somit als Mehrkammerfilter vor allem den Vorteil, daß in den beiden Filterkammern verschiedene und verschiedenen Aufgaben dienende Filtermaterialien aufgenommen werden können. So dient beispielsweise in der äußeren Filterkammer eine Filtermatte zur mechanischen Reinigung des Aquarienwassers, während in der inneren Filterkammer Filtermaterialien wie Aktivkohle, Kies, Torffasern, Lavasplitt und dergleichen der chemischen Beeinflussung bzw. Regenerierung des Aquarienwassers dienen sollen.

Bei der bekannten Bauart ergibt sich durch die unterschiedlichen Querschnitte der beiden konzentrischen Filterkammern zwangsläufig eine in radialer Richtung stark zunehmende Strömungsgeschwindigkeit des Aquarienwassers. Dies bedeutet andererseits, daß das Filtermaterial der inneren Filterkammer sich infolge der hohen Strömungsgeschwindigkeit verhältnismäßig rasch zusetzt und häufig gereinigt werden muß. Außerdem bereitet die mit sinkender Filterleistung erforderliche Reinigung durch die komplizierte und verschachtelte Bauform des Filterkörpers gewisse Schwierigkeiten.

Der vorliegenden Erfindung liegt somit die Aufgabe zugrunde, ein als Mehrkammerfilter ausgebildetes, wartungsfreundliches Aquarienfilter mit hoher Durchsatzleistung zu schaffen.

Diese Aufgabe wird erfindungsgemäß dadurch gelöst, daß bei einem Aquarienfilter der eingangs genannten Art der Filterkörper aus mindestens einer im wesent-

0003523

lichen quaderförmig ausgebildeten Kassette besteht, welche an zwei gegenüberliegenden Seitenflächen lösbare und mit Durchbrüchen versehene Deckel besitzt und daß in der Kassette die Klarwasserkammer zwischen den außenliegenden Filterkammern angeordnet ist. Durch die quaderförmige Ausgestaltung der Kassette des erfindungsgemäßen Aquarienfilters stellen sich in beiden Filterkammern gleichmäßige Strömungsgeschwindigkeiten des Aquarienwassers ein, wodurch die Aufnahmefähigkeit an Schmutzstoffen erhöht wird und wodurch eine Reinigung weniger häufig durchgeführt werden muß. Da die beiden außenliegenden Filterkammern durch Lösen der Deckel leicht zugänglich sind, gestaltet sich die von Zeit zu Zeit durchzuführende Reinigung besonders einfach. Weitere Vorteile ergeben sich durch die der Geometrie der meisten Aquarien angepaßte quaderförmige Gestalt der Kassette und durch die vollständige Funktionstrennung der beiden Filterkammern. Als Folge dieser Funktionstrennung, die sich durch die außenliegende Anordnung beider Filterkammern ergibt, können die Filterkammern unabhängig voneinander verschiedene Aufgaben wahrnehmen. So kann beispielsweise eine Filterkammer als mechanisches Filter und die andere Filterkammer als biologisches Filter ausgestaltet werden. Setzt sich in diesem Fall der mechanische Filterteil infolge Verschmutzung zu, so wird durch den biologischen Filterteil immer noch eine Filterung gewährleistet. Demgegenüber wird bei einem nach dem Stand der Technik ausgebildeten Aquarienfilter bei einem Zusetzen des mechanischen Filterteils jegliche Filterung des Aquarienwassers unterbunden.

Bei einer bevorzugten Ausführungsform des erfindungsgemäßen Aquarienfilters ist zwischen der Klarwasserkammer und einer Filterkammer eine fest mit der
Kassette verbundene und mit Durchbrüchen versehene
Zwischenwand angeordnet. Diese Zwischenwand erhöht
die mechanische Stabilität der Kassette. Vorzugsweise besitzt die Zwischenwand mehrere, die Klarwasserkammer bildende Drainagevorsprünge. Da diese
Drainagevorsprünge das Filtermaterial der angrenzenden Filterkammer auf Abstand halten und die Abführung des Wasser gewährleisten, ist zur Bildung der
Klarwasserkammer keine zweite Zwischenwand erforderlich.

Bei einer weiteren bevorzugten Ausführungsform des
erfindungsgemäßen Aquarienfilters ist mit Abstand
vor einem der Deckel ein dritter mit Durchbrüchen
versehener Deckel lösbar angeordnet und der Querschnitt der Durchbrüche des dritten Deckels um mehrere
Größenordnungen kleiner als der Querschnitt der Durchbrüche der beiden anderen Deckel. Hierdurch wird die
Strömungsgeschwindigkeit des durch den dritten Deckel
strömenden Aquarienwassers wesentlich erhöht, d.h.
im Aquarienwasser schwebende Schmutzteilchen können
besser erfaßt und in einem weiteren Einzugsbereich
angesaugt werden. Hinter dem Deckel erweitert sich
dann der zur Verfügung stehende Querschnitt wieder,
so daß sich beim Durchströmen der angrenzenden Filterkammer wieder eine gleichmäßige und verhältnismäßig geringe Strömungsgeschwindigkeit einstellt.

0003523

Eine weitere Erleichterung der Wartung des erfindungsgemäßen Aquarienfilters ergibt sich dadurch, daß die Ansaugeinrichtung aus einem im wesentlichen quaderförmig ausgebildeten Basisteil und einem damit verbundenen Förderteil besteht und daß die Verbindung zwischen Basisteil und Klarwasserkammer durch Aufsetzen einer Kassette herstellbar ist. Da das Basisteil bei der Reinigung des Filters im Aquarienwasser verbleibt, kann es weitgehend in den am Boden eines Aquariums vorhandenen Sand eingefügt werden. Bei Vorhandensein einer Ersatzfilterkassette kann diese äußerst rasch an Stelle einer verschmutzten Kassette auf das Basisteil aufgesetzt werden. Zur Erhöhung der Standfestigkeit des Basisteils im Aquarium kann dieses eine überstehende Grundplatte besitzen. Bei einem mit Ballast wie z.B. Kies, füllbaren Basisteil wird durch das zusätzliche Gewicht ebenfalls die Standfestigkeit erhöht.

Das erfindungsgemäße Aquarienfilter kann durch seine Kassettenbauweise nach dem Baukastensystem zu größeren Einheiten zusammengesetzt und auf verschiedene Durchsatzleistungen und Aquariengrößen abgestimmt werden. Eine Möglichkeit hierzu besteht darin, daß zur Parallelschaltung der Kassetten die zugehörigen Basisteile miteinander verbindbar sind. Bei einer weiteren Möglichkeit sind zur Reihenschaltung der Kassetten die Kassetten übereinander stapelbar und im Bereich der Klarwasserkammern miteinander verbindbar.

Vorteilhaft besteht die Kassette aus einem durch Spritzguß verarbeitbaren Kunststoff. Hierdurch wird eine preisgünstige Serienherstellung durch Spritzgießen der Kassetten ermöglicht. Außerdem sind derartige Kunststoffe auch gegen Salzwasser beständig und weisen gegenüber dem Aquarienwasser ein inertes Verhalten auf.

Im folgenden werden Ausführungsbeispiele der Erfindungen anhand der Zeichnung näher erläutert. Es zeigt

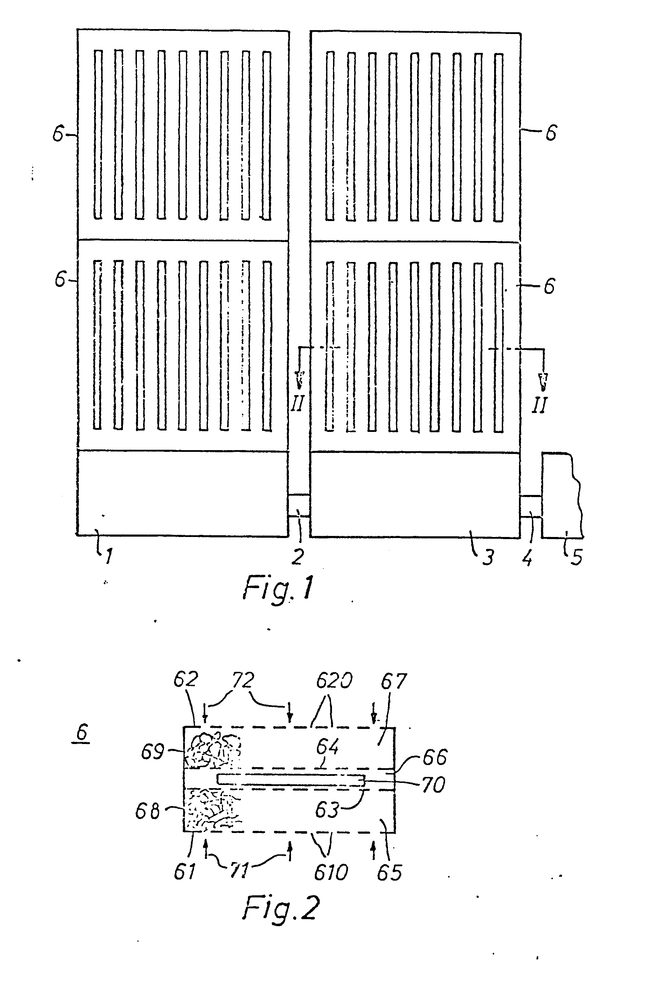

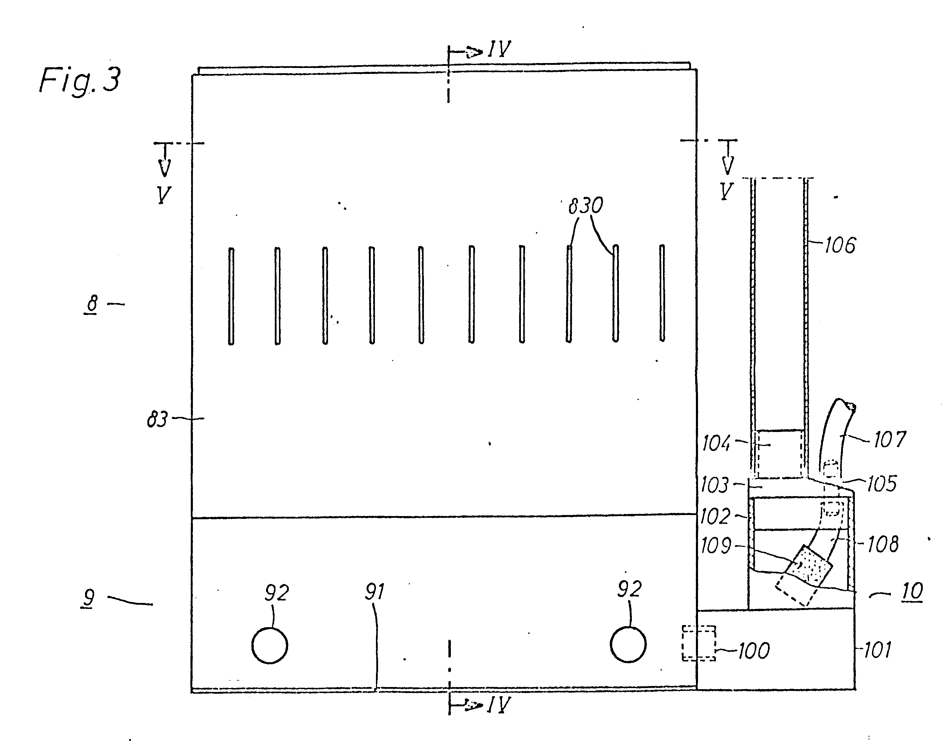

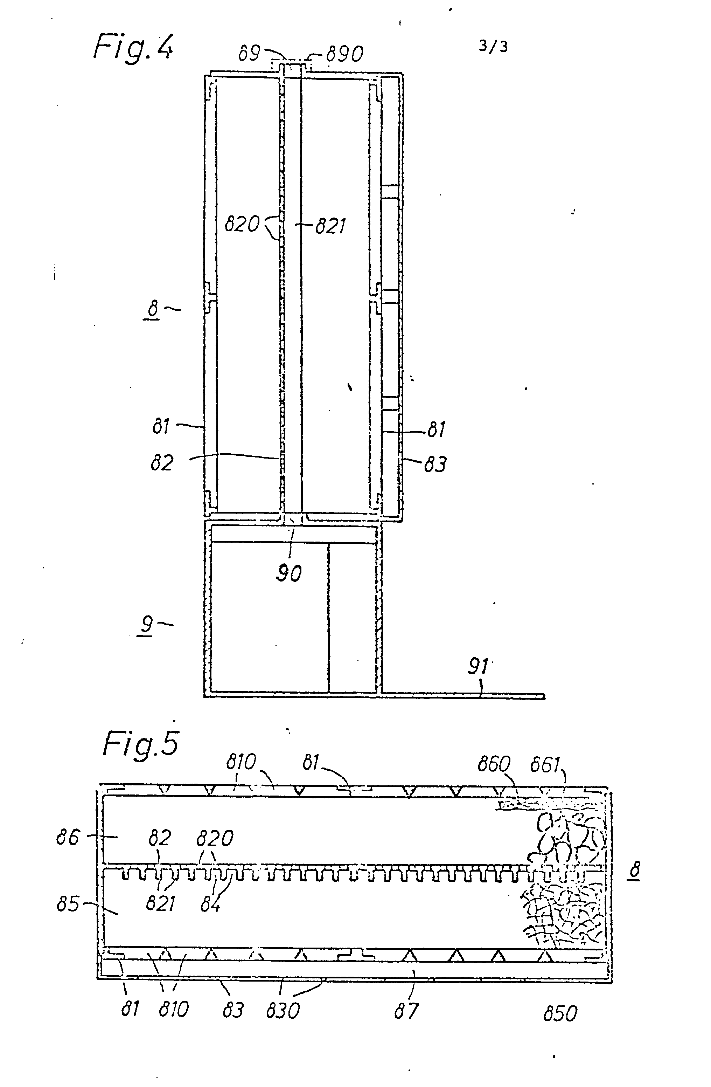

Figur 1 in vereinfachter schematischer Darstellung die nach dem Baukastensystem gegebenen Variationsmöglichkeiten des erfindungsgemäßen Aquarienfilter, Figur 2 das Funktionsprinzip des Filters anhand eines Querschnittes durch eine der in Fig. 1 dargestellten Kassetten, Figur 3 ein konstruktives Ausführungsbeispiel eines erfindungsgemäßen Aquarienfilters im Aufriß, Figur 4 einen Schnitt gemäß der Linie IV-IV der Fig. 3 und Figur 5 einen Schnitt gemäß der Linie V-V der Figur 3.

Fig. 1 zeigt ein quaderförmiges Basisteil 1, welches über ein rohrförmiges Verbindungsstück 2 mit einem weiteren Basisteil 3 verbunden ist. Das Basisteil 3 ist über ein rohrförmiges Verbindungsstück 4 mit einem in der Zeichnung nicht näher dargestellten Förderteil 5 verbunden, welches seinerseits an eine Mammutpumpe oder an eine Kreiselpumpe angeschlossen sein kann. Über jedem der Basisteile 1 und 3 sind jeweils zwei gleichartig ausgebildete Filterkassetten 6 übereinander angeordnet. Wie leicht zu erkennen ist, kann die dargestellte Anordnung mit vier Filterkassetten 6 sowohl in der Höhe als auch in der Breite um weitere Filterkassetten erweitert werden.

In einem Querschnitt gemäß der Linie II-II der Fig.1 ist in Fig. 2 das Funktionsprinzip einer Filterkassette 6 dargestellt. Die Filterkassette 6 besitzt einen lösbaren vorderen Deckel 61 und einen lösbaren hinteren Deckel 62, wobei die beiden Deckel 61 und 62 gleich ausgebildet sind und mehrere schlitzförmige Durchbrüche 610 bzw. 620 aufweisen. Zwei mit Durchbrüchen versehene Zwischenwände 63 und 64 unterteilen den Innenraum der Kassette 6 derart, daß zwischen dem vorderen Deckel 61 und der Zwischenwand 63 eine vordere Filterkammer 65, zwischen der Zwischenwand 63 und der Zwischenwand 64 eine Klarwasserkammer 66 und zwischen der Zwischenwand 64 und dem hinteren Deckel 62 eine hintere Filterkammer 67 gebildet wird. Die vordere Filterkammer 65 ist zur Aufnahme eines ersten Filtermaterials 68, wie z.B. grobfaseriger Kunststoffwolle bestimmt, während die hintere Filterkammer 67 zur Aufnahme eines zweiten Filtermaterials 69 wie z.B. Quarzkies bestimmt ist. Die Klarwasserkammer besitzt einen unteren Schlitz 70, durch welchen die Verbindungen zu den in Fig. 1 dargestellten Basisteilen 1 bzw. 3 und dem Förderteil 5 hergestellt wird. Ein dem unteren Schlitz 70 entsprechender oberer Schlitz sorgt für die Verbindung mit der Klarwasserkammer einer aufgesetzten Filterkassette 6 und wird bei den oben angeordneten Filterkassetten 6 durch geeignete Verschlußstücke geschlossen. Das über die Klarwasserkammer 66 angesaugte Aquarienwasser wird auf einem durch die Pfeile 71 angezeigten Strömungsweg in der vorderen Filterkammer 65 einer mechanischen Reinigung und unabhängig davon auf einem durch die Pfeile 72 angezeigten Strömungsweg in der hinteren Filterkammer 67 einer biologischen Reinigung unterzogen.

Die Figuren 3, 4 und 5 zeigen im Aufriß, bzw. im Längsschnitt bzw. im Querschnitt ein Aquarienfilter mit einer Filterkassette 8, einem Basisteil 9 und einem Förderteil 10. Die Filterkassette 8 besitzt zwei gleiche ausgebildete, steckbare äußere Deckel 81, welche mit schlitzförmigen Durchbrüchen 810 versehen sind, eine fest angeordnete Zwischenwand 82, welche mit Durchbrüchen 820 versehen ist und als Rippen ausgebildete Drainagevorsprünge 821 aufweist, sowie einen steckbaren äußeren Zusatzdeckel 83, welcher mit Durchbrüchen 830 versehen ist. Der Querschnitt der Durchbrüche 830 ist hierbei um einige Größenordnungen kleiner gewählt als der Querschnitt der Durchbrüche 810 eines der Deckel 81. Die Zwischenwand 82 bildet zusammen mit den Drainagevorsprüngen 821 eine Klarwasserkammer 84, an welche nach beiden Seiten hin Filterkammern 85 bzw. 86 angrenzen. Zwischen dem Zusatzdeckel 83 und dem benachbarten Deckel 81 liegt eine Schmutzkammer 87, in welche im Aquarienwasser schwebende Schmutzteilchen in einem relativ weiten Einzugsbereich gesaugt werden. Die Filterkammern 85 und 86 sind für die Aufnahme von Filtermaterialien bestimmt. Wie es im Querschnitt der Fig. 5 angedeutet ist, kann in der als mechanisches Filter wirkenden Filterkammer 85 beispielsweise eine grobfaserige Polsterwolle 850

als Filtermaterial dienen, während in der als biologisches Filter wirkenden Filterkammer 86 beispielsweise ein Polyesterfaservlies 860 und Quarzkies 861 als Filtermaterial dienen kann. Die Polyesterwolle 850 wird hierbei durch die Drainagevorsprünge 821 so auf Abstand gehalten, daß sie die Klarwasserkammer 84 nicht verstopfen kann.

Die auf das Basisteil 9 aufgesetzte Filterkassette 8 besitzt im Bereich der Klarwasserkammer 84 einen in ihren Boden eingebrachten Schlitz 88, in welchem der vorspringende Rand eines entsprechenden im Basisteil 9 vorhandenen Schlitzes 90 eingreift. Auf diese Weise wird einerseits eine Verbindung zwischen der Klarwasserkammer 84 und dem Hohlraum des Basisteiles 9 hergestellt und andererseits die Lage der Filterkassette 8 auf dem Basisteil 9 fixiert. Auf der dem Schlitz 88 gegenüberliegenden Seite der Filterkassette 8 ist im Bereich der Klarwasserkammer 84 ein weiterer Schlitz 89 vorgesehen, welcher in gleicher Weise wie der Schlitz 90 einen nach oben vorspringenden Rand besitzt. Somit kann auf die Filterkassette 8 eine weitere Filterkassette lagegerecht aufgesetzt werden, wobei gleichzeitig die Klarwasserkammern untereinander verbunden werden. Wird keine weitere Filterkassette aufgesetzt, so muß der obere Schlitz 89 verschlossen werden, beispielsweise durch ein Klebeband oder durch eine im Längsschnitt der Fig. 4 strichpunktiert eingezeichnete Verschlußkappe 890.

Das Basisteil 9 kann so am Boden eines Aquariums angeordnet werden, daß es bis zu ca. 90 % seiner Höhe
durch den Aquariensand verdeckt wird. Zur Erhöhung
der Standfestigkeit besitzt das Basisteil 9 eine nach
einer Seite überstehende Grundplatte 91. Eine weitere
Erhöhung der Standfestigkeit stellt sich ein , wenn
das Basisteil 9 mit Ballastmaterial wie Quarzkies
oder dergleichen gefüllt wird. In den Seitenwänden
des Basisteils 9 sind mehrere Löcher 92 vorgesehen,
in welche das rohrförmige Anschlußstück 100 des Förderteils 10 gesteckt werden kann. Die Lage des Förderteils 10 kann also je nach den im Aquarium vorliegenden Verhältnissen in Bezug auf das Basisteil 9
variiert werden. Die Löcher 92 sind ferner dafür vorgesehen, bei einer eventuellen Erweiterung des Aquarienfilters die Verbindung zu benachbarten Basisteilen herzustellen. Die nicht genutzten Löcher 92 müssen verschlossen werden, was beispielsweise durch
geeignete Verschlußklappen erfolgen kann.

Das Förderteil 10 besitzt einen quaderförmig ausgebildeten Grundkörper 101, dessen Hohlraum über das
Anschlußstück 100 mit dem Basisteil 9 verbunden ist.
Auf dem Grundkörper 101 ist das zylindrische Pumpengehäuse 102 einer Mammutpumpe fest angeordnet. Der
obere Abschlußdeckel 103 des Pumpengehäuses 102 besitzt einen nach oben ragenden Stutzen und einen nach
oben und unten ragenden Stutzen 105. Auf den Stutzen
104 ist das Förderrohr 106 der Mammutpumpe aufgesteckt, während auf den Stutzen 105 nach außen hin
ein Luftzuleitungsschlauch 107 und nach innen hin
das schlauchförmige Anschlußstück 108 eines porösen
Düsensteins 109 aufgesteckt sind. Der Abschlußdeckel

0003523

103 ist auf das Pumpengehäuse 102 aufgesteckt, so daß der Düsenstein 109 sehr leicht ausgewechselt werden kann.

Beim Betrieb des vorstehend beschriebenen Aquarienfilters saugt die Mammutpumpe des Förderteils 10 das Aquarienwasser über das Basisteil 9 und die Klarwasserkammer 84 so an, daß es beim Durchtritt durch die Filterkammern 85 und 86 mechanisch bzw. biologisch gereinigt wird. Das gereinigte Aquarienwasser wird dann über das Förderrohr 106 der Mammutpumpe zurückgeführt. Die in den Figuren 3 bis 5 verkleinert dargestellte Filterkassette ist beispielsweise 16 cm breit, 14 cm hoch und 6 cm tief. Beim Betrieb eines Aquarienfilters mit einer derartigen Filterkassette wurden Durchsatzleistungen von ca. ................ gemessen.

Patentansprüche:

1. Aquarienfilter mit einem der Zurückhaltung von Verunreinigungen des Aquarienwassers dienenden Filterkörper und einer Ansaugeinrichtung, wobei der Filterkörper zwei zur Aufnahme von Filtermaterialien bestimmte Filterkammern und eine mit der Ansaugeinrichtung in Verbindung stehende Klarwasserkammer umfaßt, dadurch gekennzeichnet, daß der Filterkörper aus mindestens einer im wesentlichen quaderförmig ausgebildeten Kassette (6,8) besteht, welche an zwei gegenüberliegenden Seitenflächen lösbare und mit Durchbrüchen (610, 620, 810) versehene Deckel (61, 62, 81) besitzt und daß in der Kassette (6, 8) die Klarwasserkammer (66, 84) zwischen den außenliegenden Filterkammern (65, 67, 85, 86) angeordnet ist.

2. Aquarienfilter nach Anspruch 1, dadurch gekennzeichnet, daß zwischen der Klarwasserkammer (84) und einer Filterkammer (86) eine fest mit der Kassette (8) verbundene und mit Durchbrüchen (820) versehene Zwischenwand (82) angeordnet ist.

3. Aquarienfilter nach Anspruch 2, dadurch gekennzeichnet, daß die Zwischenwand (82) mehrere, die Klarwasserkammer (84) bildende Drainagevorsprünge (821) besitzt.

4. Aquarienfilter nach einem der vorhergehenden Ansprüche, dadurch gekennzeichnet, daß mit Abstand vor einem der Deckel (81) ein dritter

0003523

mit Durchbrüchen (830) versehener Deckel (83) lösbar angeordnet ist und daß der Querschnitt der Durchbrüche (830) des dritten Deckels (83) um mehrere Größenordnungen kleiner ist als der Querschnitt der Durchbrüche (810) der beiden anderen Deckel (81).

5. Aquarienfilter nach einem der vorhergehenden Ansprüche, dadurch gekennzeichnet, daß die Ansaugeinrichtung aus einem im wesentlichen quaderförmig ausgebildeten Basisteil (1, 3, 9) und einem damit verbundenen Förderteil (5, 10) besteht, und daß die Verbindung zwischen Basisteil (1, 3, 9) und Klarwasserkammer (66, 84) durch Aufsetzen einer Kassette (6, 8) herstellbar ist.

6. Aquarienfilter nach Anspruch 5, dadurch gekennzeichnet, daß das Basisteil (9) eine überstehende Grundplatte (91) besitzt.

7. Aquarienfilter nach Anspruch 5 oder 6, gekennzeichnet, durch ein mit Ballast füllbares Basisteil (9).

8. Aquarienfilter nach einem der Ansprüche 5 bis 7, dadurch gekennzeichnet, daß zur Parallelschaltung der Kassetten (6, 8) die zugehörigen Basisteile (1, 3, 9) miteinander verbindbar sind.

9.  Aquarienfilter nach einem der vorhergehenden Ansprüche, dadurch gekennzeichnet, daß
    zur Reihenschaltung der Kassetten (6, 8) die Kas-
    setten (6, 8) übereinander stapelbar und im Bereich der Klarwasserkammern (66, 84) miteinander
    verbindbar sind.

10. Aquarienfilter nach einem der vorhergehenden Ansprüche, dadurch gekennzeichnet, daß
    die Kassette (8) aus einem durch Spritzguß ver-
    arbeitbaren Kunststoff besteht.

Fig. 1

Fig. 2

Fig. 3

*Fig.4*

69　890

820　821

8 ～

81　81

82　83

90

9 ～

91

*Fig.5*

810　81　860　861

86

82　820

8

85

821　84

81　810　83　830　87　850

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 768 651 (STREETER)<br>* Spalte 1, Zeile 51 bis Spalte 2, Zeile 30 * | 1 |
| | -- | |
| | US - A - 3 669 297 (WILLINGER)<br>* Spalte 4, Zeilen 37-57; Figur 7 * | 1 |
| | -- | |
| | US - A - 3 513 978 (NEWSTEDER)<br>* Spalte 3, Zeile 4 bis Spalte 4, Zeile 46; Figuren 4-8 * | 1 |
| | -- | |
| | US - A - 3 487 440 (NEWSTEDER)<br>* Spalte 2, Zeile 22 bis Spalte 3, Zeile 21 * | 1,5 |
| | -- | |
| | DE - A - 1 911 857 (HAGEMANN)<br>* Seite 11, Absatz 1 * | 5 |
| | -- | |
| | US - A - 3 891 555 (BENNETT)<br>* Spalte 2, Zeile 34 bis Spalte 3, Zeile 20; Spalte 4, Zeilen 4-10 * | 6,9,10 |
| | -- | |
| | US - A - 4 067 809 (KATO)<br>* Spalte 6, Zeilen 42-56; Figuren 5-7 * | 6 |
| | -- | |
| | DE - A - 1 607 151 (FISCHER)<br>./. | 6 |

**KLASSIFIKATION DER ANMELDUNG (Int.Cl.²)**

A 01 K 64/02
B 01 D 29/00

**RECHERCHIERTE SACHGEBIETE (Int. Cl.²)**

A 01 K
B 01 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-05-1979 | CRUCHTEN |

EPA form 1503.1  06.78

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | * Seite 4, Absatz 2 * | |
| | -- | |
| | FR - A - 2 255 014 (NITHARDT) <br> * Seite 4, Zeile 37 bis Seite 5, Zeile 24 * | 5,9 |
| | -- | |
| | GB - A - 1 208 994 (STERNCO IND.) <br> * Seite 3, Zeilen 112-129 * | 9 |
| | ---- | |

**KLASSIFIKATION DER ANMELDUNG (Int.Cl.²)**

**RECHERCHIERTE SACHGEBIETE (Int. Cl.²)**